# EUROPEAN PATENT APPLICATION

(11) **EP 3 916 515 A1**
(43) Date of publication of application: **01.12.2021**
(21) Application number: 21166139.2
(22) Date of filing: 31.03.2021
(51) Int. Cl.: G06F 1/18

(54) **STACKED COMPUTER SYSTEM**

(30) Priority: 29.05.2020 TW 109117953
(71) Applicant: Giga-Byte Technology Co., Ltd., New Taipei City 231 (TW)
(72) Inventor: Huang, Ching-Hsun, 231 New Taipei City (TW); Liao, Tse-Hsien, 231 New Taipei City (TW); Chen, Chin-Hui, 231 New Taipei City (TW); Joung, Erh-Chia, 231 New Taipei City (TW); Chen, Yuan-Liang, 231 New Taipei City (TW); Lee, Chun-Chien, 231 New Taipei City (TW); Shih, Po-Jen, 231 New Taipei City (TW)
(74) Representative: Becker, Eberhard

(57) **Abstract**

A stacked computer system (100, 100a) includes a main machine module (110, 110a) and expansion modules (120, 120a, 125, 125a, 127, 128) detachably stacked with each other. Each of the expansion modules is electrically connected to the main machine module. Each of the main machine module and the expansion modules includes a first connector (130) located at an upper position and a second connector (140) located at a lower position. In any two of the main machine module and the expansion modules adjacent to each other, the first connector of a lower one is connected to the second connector of the other one. Each of the first connector and the second connector includes at least two of a data transmission control interface, a power supply interface, a display signal transmission interface and a detection interface.

## Description

### BACKGROUND

### Technical Field

The disclosure relates to a computer system, and particularly relates to a stacked computer system expandable based on needs.

### Description of Related Art

Computers have been an indispensable part of work and life. Currently, most computers have similar specifications and include similar components. However, in hundreds of environments and occasions where computers are used, such as household, factory, hospital, the needs are not exactly the same. Some components in the computers are hardly used, whereas some other components need to be additionally installed. The different needs of use cannot be readily satisfied.

### SUMMARY

The embodiments of the disclosure provide a stacked computer system, which is a customized stacked computer system formed by assembling expansion modules chosen by the user based on needs.

An embodiment of the disclosure provides a stacked computer system. The stacked computer system includes a main machine module and a plurality of expansion modules. The main machine module and the expansion modules are detachably stacked to each other. Each of the expansion modules is electrically connected to the main machine module. Each of the main machine module and the expansion modules includes a first connector located at an upper position and a second connector located at a lower position. In any adjacent two of the main machine module and the expansion modules, the first connector of a lower one is connected to the second connector of the other, and each of the first connector and the second connector includes at least two of a data transmission control interface, a power supply interface, a display signal transmission interface, and a detection interface.

According to an embodiment of the disclosure, each of the main machine module and the expansion modules includes a first alignment part located at the upper position and a second alignment part located at the lower position, and in any adjacent two of the main machine module and the expansion modules, the first alignment part of a lower one is aligned to the second alignment part of the other.

According to an embodiment of the disclosure, each of the main machine module and the expansion modules includes an upper surface and a lower surface which are non-planar, and in any adjacent two of the main machine module and the expansion modules, a profile of the upper surface of a lower one corresponds to a profile of the lower surface of the other.

According to an embodiment of the disclosure, one of the upper surface and the lower surface is a convex surface, and the other is a concave surface.

According to an embodiment of the disclosure, each of the main machine module and the expansion modules includes a groove recessed from a lower surface and a cap protruding from an upper surface, and in any adjacent two of the main machine module and the expansion modules, the cap of a lower one is accommodated in the groove of the other.

According to an embodiment of the disclosure, each of the main machine module and the expansion modules includes a plurality of anti-offset lead angles provided around the groove, and the anti-offset lead angles face toward the groove.

According to an embodiment of the disclosure, the data transmission control interface includes pins of at least one of an SMBUS interface, a USB interface, a PCI-E interface, a SATA interface, and an I2C BUS interface.

According to an embodiment of the disclosure, the power supply interface includes at least one of a 3.3V pin, a 5V pin, and a 12V pin.

According to an embodiment of the disclosure, the data transmission control interface includes pins of at least one of an EDP interface, an LVDS interface, a DP interface, and an HDMI interface.

According to an embodiment of the disclosure, the detection interface includes pins of at least one of Detect PIN, GPIO, and COM Port.

According to an embodiment of the disclosure, the expansion modules include at least two of a speaker module, a battery module, a 5G signal module, and a display module.

Based on the above, the main machine module and the expansion modules of the stacked computer system according to the embodiments of the disclosure are suitable to be stacked with each other. Each of the main machine module and the expansion modules includes the first connector located at the upper position and the second connector located at the lower position. In addition, the first connector may be connected to the second connector. Each of the first connector and the second connector includes at least two of the data transmission control interface, the power supply interface, the display signal transmission interface and the detection interface. Accordingly, signals may be transmitted among the main machine module and the expansion modules. With such design, the user may choose the expansion modules as needed and assemble the modules by stacking the modules. By stacking and connecting the main machine module and the chosen expansion modules with each other, the respective expansion modules are electrically connected to the main machine module. In this way, the user may choose the expansion modules in correspondence with the needs and simply assemble the modules to form a customized stacked computer system having a compact appearance.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic perspective view illustrating a stacked computer system according to an embodiment of the disclosure.
FIG. 2 is a schematic perspective view illustrating that a display of the stacked computer system of FIG. 1 is raised.
FIG. 3 is a schematic front perspective view of a main machine module of the stacked computer system of FIG. 1.
FIG. 4 is a schematic back perspective view of FIG. 3.
FIG. 5 is a schematic cross-sectional view taken along a A-A line of FIG. 3.
FIG. 6 is a schematic cross-sectional view taken along a B-B line of FIG. 3.
FIG. 7 is a schematic front perspective view of an expansion module of the stacked computer system of FIG. 1.
FIG. 8 is a schematic back perspective view of FIG. 7.
FIG. 9 is a schematic view illustrating pins of a first connector of the stacked computer system of FIG. 1.
FIG. 10 is a schematic view illustrating pins of a second connector of the stacked computer system of FIG. 1.
FIG. 11 is a schematic exploded view illustrating a stacked computer system according to another embodiment of the disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

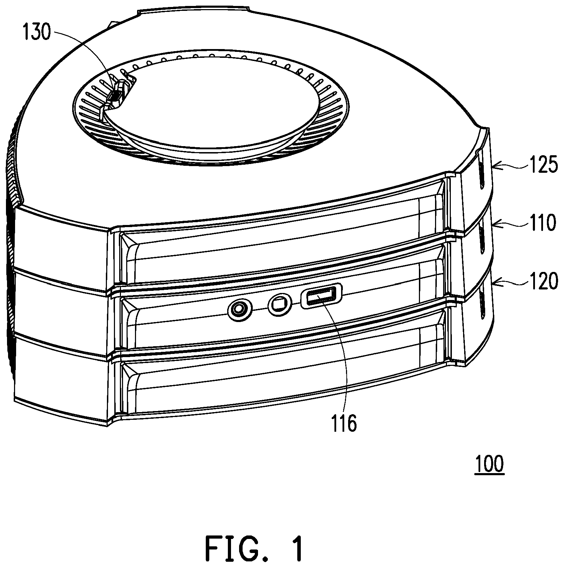

FIG. 1 is a schematic perspective view illustrating a stacked computer system according to an embodiment of the disclosure. Referring to FIG. 1, in the embodiment, a stacked computer system 100 includes a main machine module 110 and a plurality of expansion modules 120 and 125. The expansion modules 120 and 125 are electrically connected to the main machine module 110. The main machine 110 and the expansion modules 120 and 125 are detachably stacked with each other. The expansion modules 120 and 125 include at least two of a speaker module, a battery module, a 5G signal module, and a display module. Of course, the types of the expansion modules 120 and 125 are not limited to the above.

In the embodiment, the stacked computer system 100 includes two expansion module 120 and 125, respectively disposed below and above the main machine module 110. The expansion module 120 located below the main machine module 110 is, for example, a battery module, and the expansion module 125 located above the main machine module 110 is, for example, a display module. Of course, the quantity, the locations, and the types of the expansion modules 120 and 125 are not limited to the above.

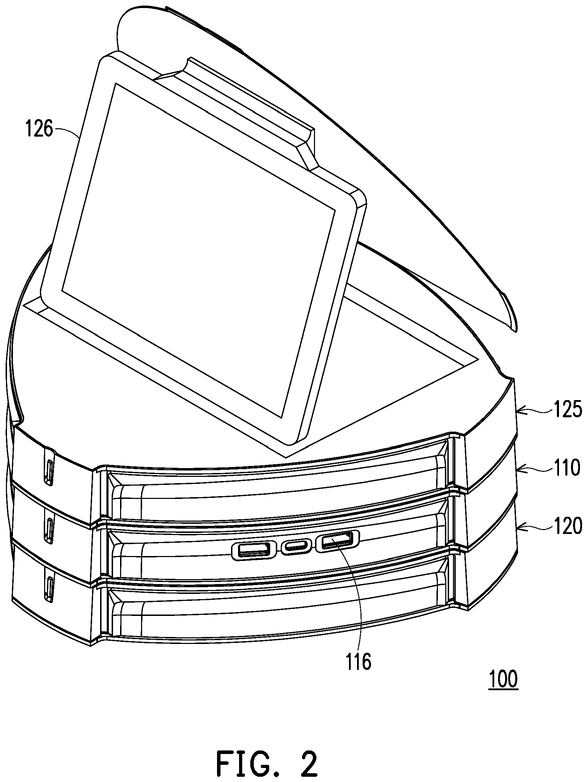

FIG. 2 is a schematic perspective view illustrating that a display 126 of the stacked computer system 100 of FIG. 1 is raised. Referring to FIGs. 1 and 2, in the embodiment, when the stacked computer system 100 is not in use, the display 126 of the expansion module 125 may be retracted. The display 126 of the expansion module 125 may be flipped and raised through fitting between a rail (not shown) and a flipping mechanism (not shown), for example. Therefore, when intending to use the display 126, the user may easily flip and raise the display 126 to display information.

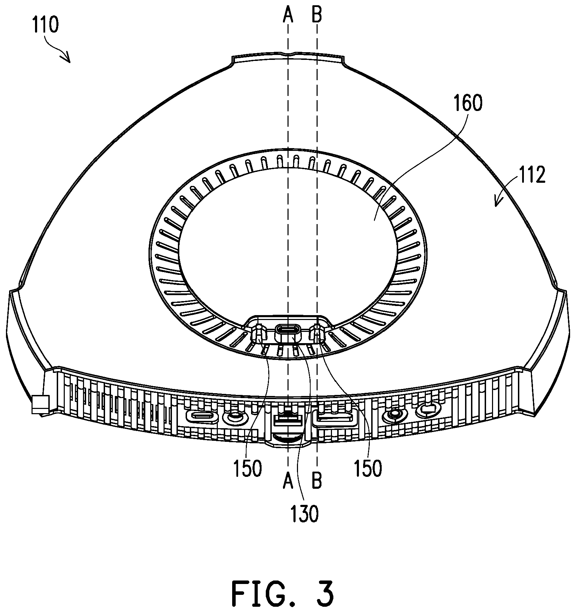

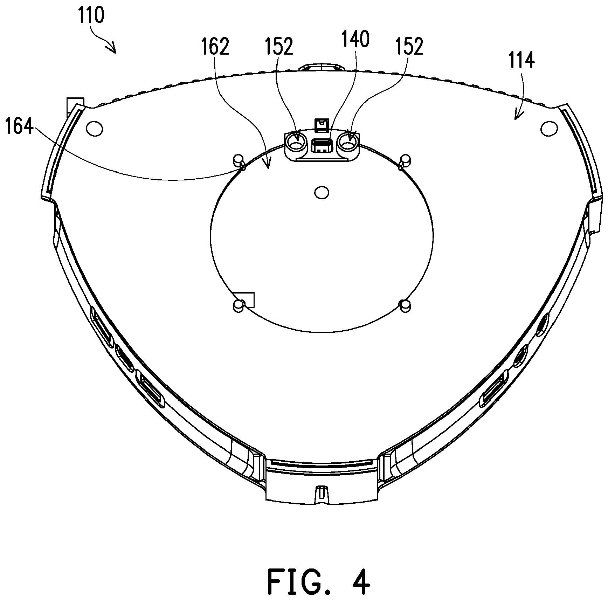

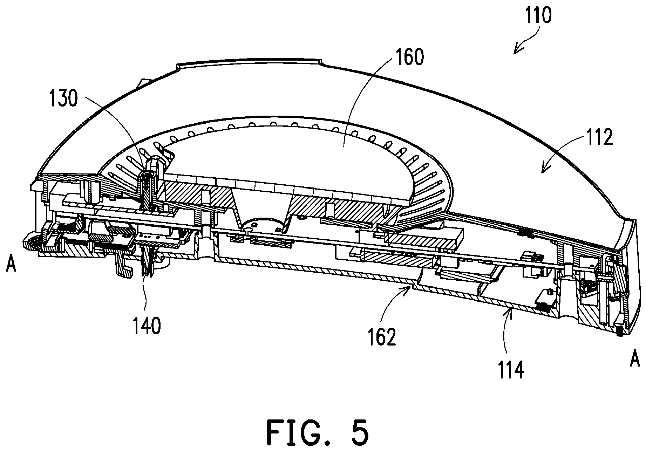

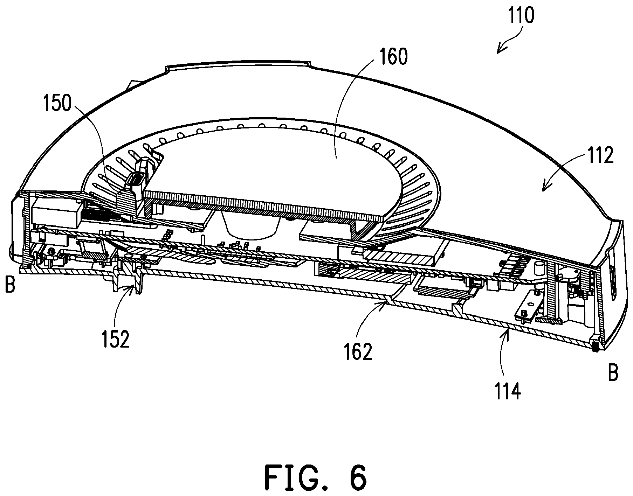

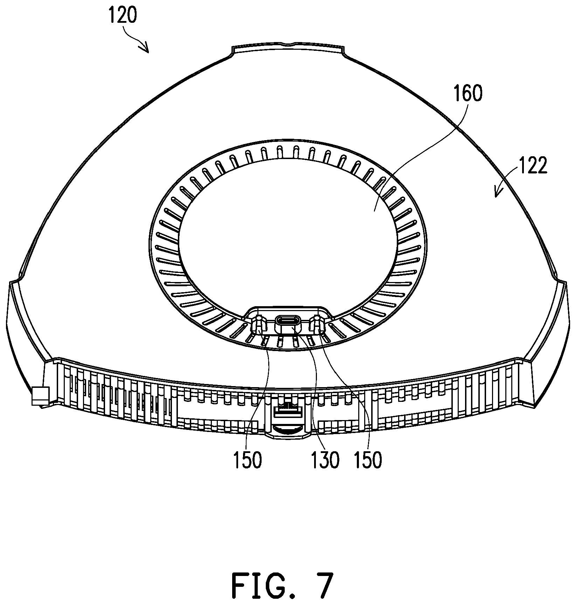

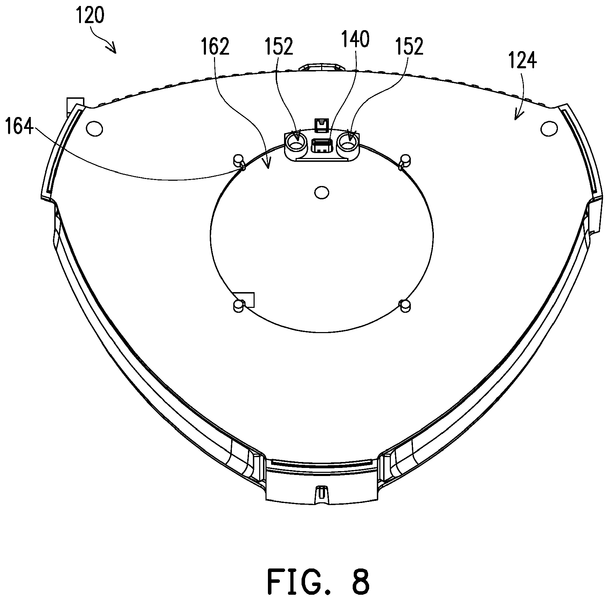

FIG. 3 is a schematic front perspective view of a main machine module of the stacked computer system of FIG. 1. FIG. 4 is a schematic back perspective view of FIG. 3. FIG. 5 is a schematic cross-sectional view taken along a A-A line of FIG. 3. FIG. 6 is a schematic cross-sectional view taken along a B-B line of FIG. 3. FIG. 7 is a schematic front perspective view of a expansion module of the stacked computer system of FIG. 1. FIG. 8 is a schematic back perspective view of FIG. 7.

Referring to FIGs. 3 to 8, in the embodiment, each of the main machine module 110 and the expansion modules 120 and 125 includes a first connector 130 located at the upper position and a second connector 140 located at the lower position. In the embodiment, the first connector 130 is a male connector, whereas the second connector 140 is a female connector, for example. However, the types of the first connector 130 and the second connector 140 are not limited thereto. In any adjacent two of the main machine module 110 and the expansion modules 120 and 125, the first connector 130 of the lower one is connected to the second connector 140 of the other. Accordingly, the main machine module 110 is electrically connected between the expansion modules 120 and 125.

Specifically, in the embodiment, the first connector 130 of the main machine module 110 may be connected to the second connector (e.g., the second connector 140 shown in FIG. 8) of the expansion module 125 located above the main machine module 110, and the second connector 140 of the main machine module 110 is connected to the first connector 130 of the expansion module 120 located below the main machine module 110.

Of course, in other embodiments, the main machine module 110 may also be arranged uppermost or lowermost. In an embodiment, if the main machine module 110 is arranged lowermost, the first connector 130 of the expansion module 120 located in the middle is connected to the second connector of the expansion module 125 located above the first connector 130 located in the middle, and the second connector 140 of the expansion module 120 located in the middle is connected to the first connector 130 of the main machine module 110 located below the first connector 130 located in the middle. The connection relationship among the main machine module 110 and the expansion modules 120 and 125 is not particularly limited to the above descriptions.

In addition, in the embodiment, an external connector 116 (FIG. 1) may be provided on a side surface of the main machine module 110. Of course, the expansion modules 120 and 125 may also be provided with an external connector.

In an embodiment, the main machine module 110 and the expansion modules 120 and 125 share similar appearances. To avoid repetitive descriptions, for details about the appearance and the accessories of the expansion module 125, reference is made to the descriptions about the expansion module 120 explicated in the following.

Referring to FIGs. 3, 4, and 6 to 8, the main machine module 110 includes an upper surface 112 and a lower surface 114 which are non-planar, and the expansion module 120 includes an upper surface 122 and a lower surface 124 which are non-planar. The expansion module 125 has the same design. One of the upper surface (e.g., the upper surfaces 112 and 122) and the lower surface (e.g., the lower surfaces 114 and 124) is a convex surface, and the other is a concave surface. For example, in the embodiment, the upper surfaces 112 and 122 are convex surfaces, and the lower surfaces 114 and 124 are concave surfaces.

In any adjacent two of the main machine module 110 and the expansion modules 120 and 125, the profile of the upper surface (e.g., the upper surface 112 or 122) of the lower one corresponds to the profile of the lower surface (e.g., the lower surface 114 or 124) of the other. Accordingly, the upper module may be stably disposed on the lower module without falling off easily. Such arrangement serves as a positioning measure.

Specifically, in the embodiment, the convex profile of the upper surface 112 of the main machine module 110 corresponds to the concave profile of the lower surface of the expansion module 120 located above the main machine module 110. In addition, the concave profile of the lower surface 114 of the main machine module 110 corresponds to the convex profile of upper surface 122 of the expansion module 120 located below the main machine module 110.

In addition, in the embodiment, the main machine module 110 includes a groove 162 (FIG. 4) recessed from the lower surface 114 and a cap 160 (FIG. 3) protruding from the upper surface 112, and the expansion module 120 includes a groove 162 (FIG. 8) recessed from the lower surface 124 and an cap 160 (FIG. 7) protruding from the upper surface 122. The expansion module 125 has the same design. In any adjacent two of the main machine module 110 and the expansion modules 120 and 125, the cap 160 of the lower one is accommodated in the groove 162 of the other. Such arrangement serves as another positioning measure.

In addition, in the embodiment, a plurality of anti-offset lead angles 164 (FIGs. 4 and 8) are provided around the groove 162. The anti-offset lead angles 164 are a plurality of inclined surfaces facing toward the groove 162. When the upper module is to be stacked on the lower module, the anti-offset lead angles 164 at the bottom of the upper module may guide the alignment between the modules. Accordingly, the cap 160 of the lower module may be smoothly moved into the groove 162 of the upper module.

In addition, the main machine module 110 includes a first alignment part 150 located at the upper position and a second alignment part 152 located at the lower position. The expansion module 120 includes the first alignment part 150 located at the upper position and the second alignment part 152 located at the lower position. The expansion module 125 has the same design. In any adjacent two of the main machine module 110 and the expansion modules 120 and 125, the first alignment part 150, which is the lower one, is aligned to the second alignment part 152 of the other. Such arrangement serves as yet another positioning measure.

Specifically, in the embodiment, the first alignment part 150 of the main machine module 110 is adapted to be aligned to the second positioning part of the expansion module 125 located above the main machine module 110, and the second alignment part 152 of the main machine module 110 is adapted to be aligned to the first alignment part 150 of the expansion module 120 located below the main machine module 110.

In addition, in the embodiment, the first alignment part 150 and the second alignment part 152 are respectively disposed beside the first connector 130 and the second connector 140 to ensure the first connector 130 and the second connector 140 are accurately aligned with each other, thereby effectively reducing the chance of damage when the first connector 130 and the second connector 140 are connected with each other.

In the embodiment, the first alignment part 150 is a pillar, for example, and the second alignment 152 is a hole, for example. However, the types of the first alignment part 150 and the second alignment part 152 are not limited thereto. In addition, a lead angle is provided at the top end of the pillar to guide the pillar into the hole. In an embodiment, the first alignment part 150 is a cross-type pillar, and the second alignment part 152 may be a cross-type hole for a higher accuracy of positioning and foolproofness.

As the types of the expansion modules 120 and 125 differ, the signals transmitted by the expansion modules 120 and 125 also differ. In order for the main machine module 110 and the expansion modules 120 and 125 to signal-connect with each other, the first connectors 130 and the second connectors 140 need to be able to transmit signals required by the main machine module 110 and the expansion modules 120 and 125. That is, the first connector 130 and the second connector 140 are multi-interface connectors.

With such design, as long as the main machine module 110 and the expansion modules 120 and 125 are provided with the first connectors 130 and the second connectors 140, the user is able to electrically connect the respective expansion modules 120 and 125 to the main machine module 110 by stacking and connecting the main machine module 110 and the expansion modules 120 and 125 that are chosen.

Therefore, the stacked computer system 100 of the embodiment allows the user to stack and assemble the expansion modules 120 as need, so as to assemble a customized stacked computer system having a compact appearance.

In the embodiment, each of the first connector 130 and the second connector 140 includes at least two of a data transmission control interface, a power supply interface, a display signal transmission interface, and a detection interface. In the embodiment, each of the first connector 130 and the second connector 140 includes a data transmission control interface, a power supply interface, a display signal transmission interface, and a detection interface.

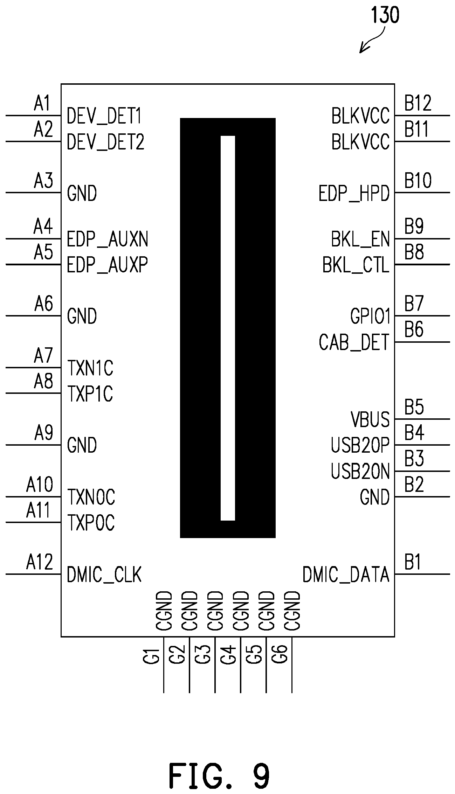

FIG. 9 is a schematic view illustrating pins of a first connector of the stacked computer system of FIG. 1. Referring to FIG. 9, in the embodiment, the first connector 130 includes pins A1 to A12, pins B1 to B12, and pins G1 to G6, for example. In the embodiment, the data transmission control interface includes pins of a SMBUS interface and pins of a USB interface. The pins A12 and B1 may serve to transmit signals of the SMBUS interface. The pins B3 to B4 may serve to transmit signals of the USB interface.

The display signal transmission interface includes pins of the EDP interface. Specifically, the pins A4 to A11 and the pins B8 to B10 may serve to transmit signals of the EDP interface. The power supply interface includes, for example, the pin B5 and the pins B11 to B12. The detection interface includes, for example, pins of Detect PIN and GPIO. Specifically, the pins A1 to A2 and B6 may serve as pins of Detect PIN, and the pin B7 may serve as a signal pin of GPIO. In the embodiment, such a detection interface may serve to detect the main machine module 100 and the expansion module 120 and 125 of different layers. In addition, in the embodiment, the pin B2 may serve as a light signal control interface to control ON and OFF of an LED light signal. Of course, the quantity as well as the transmitted signals of the pins of the first connector 130 are not limited to the above.

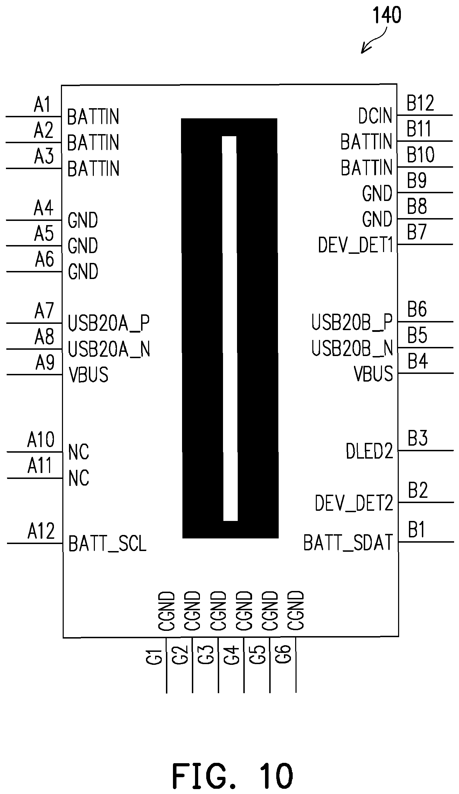

FIG. 10 is a schematic view illustrating pins of the second connector of the stacked computer system of FIG. 1. Referring to FIG. 10, in the embodiment, the second connector 140 includes the pins A1 to A12, the pins B1 to B12, and the pins G1 to G6. In the embodiment, the data transmission control interface includes pins of the SMBUS interface and pins of the USB interface. The pins A12 and B1 may serve to transmit signals of the SMBUS interface. The pins B5 to B6 may serve to transmit signals of the USB interface.

The power supply interface includes, for example, the pins A1 to A3, the pin B4, and the pins B10 to B12. The detection interface includes, for example, pins of Detect PIN and GPIO. The pins B1 and B7 may serve as pins of Detect PIN, and the pins A10 and A11 may serve as signal pins of GPIO. In addition, in the embodiment, the pin B3 may serve as a light signal control interface to control ON and OFF of an LED light signal. Of course, the quantity as well as the transmitted signals of the pins of the second connector 140 are not limited to the above.

In other embodiments, the data transmission control interface may include pins of at least one of the SMBUS interface, the USB interface, the PCI-E interface, the SATA interface, and the I2C BUS interface. The power supply interface may include at least one of a 3.3V pin, a 5V pin, and a 12V pin. The display signal transmission interface may include pins of at least one of the EDP interface, the LVDS interface, the DP interface, and the HDMI interface. The detection interface may include pins of at least one of Detect PIN, GPIO, and COM port. Of course, the types of the data transmission control interface, the power supply interface, the display signal transmission interface, and the detection interface are not limited thereto.

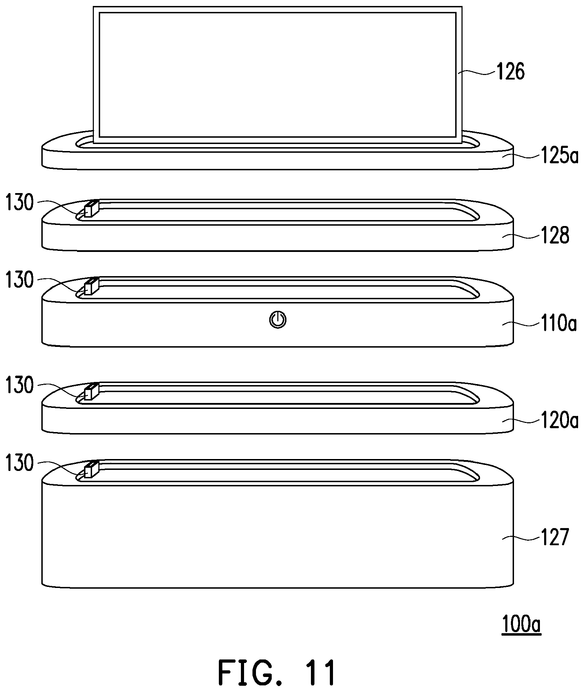

FIG. 11 is a schematic exploded view illustrating a stacked computer system according to another embodiment of the disclosure. Referring to FIG. 11, in the embodiment, a stacked computer system 100a includes a main machine module 110a and four expansion modules 127, 120a, 128, and 125a stacked to each other and electrically connected to each other. Sequentially arranged from bottom to top are the expansion modules 127 and 120a, the main machine module 110a, and the expansion modules 128 and 125a. The expansion module 127 is a smart speaker, for example. The expansion module 120a is a battery module, for example. The expansion module 128 is a 5G signal module, for example. The expansion module 125a is a display module, for example.

As cloud-related applications are under rapid development, and 5G communication has become the global trend, with the 5G signal module, the stacked computer system 100a is able to satisfy the needs for high-speed network connection and bring satisfying product experiences to the consumers. In addition to being connected by physical connectors, the main machine module 110a and the four expansion modules 127, 120a, 128, and 125a may also be connected wirelessly through, for example, 5G, Wi-Fi6, Bluetooth, etc.

Moreover, the main machine module 110a and the four expansion modules 127, 120a, 128, and 125a each have the appearance of a rectangular disc with rounded corners, for example. The profiles of the main machine module 110a and the four expansion modules 127, 120a, 128, and 125a fit each other, making it convenient to stack. Of course, the appearance of the stacked computer system 100a and the types and the arrangements of the expansion modules 127, 120a, 128, and 125a are not limited to the above.

In view of the foregoing, the main machine module and the expansion modules of the stacked computer system according to the embodiments of the disclosure are suitable to be stacked with each other. Each of the main machine module and the expansion modules includes the first connector located at the upper position and the second connector located at the lower position. In addition, the first connector may be connected to the second connector. Each of the first connector and the second connector includes at least two of the data transmission control interface, the power supply interface, the display signal transmission interface and the detection interface. Accordingly, signals may be transmitted among the main machine module and the expansion modules. With such design, the user may choose the expansion modules as needed and assemble the modules by stacking the modules. By stacking and connecting the main machine module and the chosen expansion modules with each other, the respective expansion modules are electrically connected to the main machine module. Therefore, the user may choose the expansion modules in correspondence with the needs and simply assemble the modules to form a customized stacked computer system having a compact appearance.

## Claims

1. A stacked computer system (100, 100a), comprising:
a main machine module (110, 110a); and
a plurality of expansion modules (120, 120a, 125, 125a, 127, 128), wherein the main machine module (110, 110a) and the expansion modules (120, 120a, 125, 125a, 127, 128) are detachably stacked to each other, each of the expansion modules (120, 120a, 125, 125a, 127, 128) is electrically connected to the main machine module (110, 110a), and each of the main machine module (110, 110a) and the expansion modules (120, 120a, 125, 125a, 127, 128) comprises a first connector (130) located at an upper position and a second connector (140) located at a lower position,
wherein in any adjacent two of the main machine module (110, 110a) and the expansion modules (120, 120a, 125, 125a, 127, 128), the first connector (130) of a lower one is connected to the second connector (140) of the other, and each of the first connector (130) and the second connector (140) comprises at least two of a data transmission control interface, a power supply interface, a display signal transmission interface, and a detection interface.

2. The stacked computer system (100, 100a) as claimed in claim 1, wherein each of the main machine module (110, 110a) and the expansion modules (120, 120a, 125, 125a, 127, 128) comprises a first alignment part (150) located at the upper position and a second alignment part (152) located at the lower position, and in any adjacent two of the main machine module (110, 110a) and the expansion modules (120, 120a, 125, 125a, 127, 128), the first alignment part (150) of a lower one is aligned to the second alignment part (152) of the other.

3. The stacked computer system (100, 100a) as claimed in claim 1, wherein each of the main machine module (110, 110a) and the expansion modules (120, 120a, 125, 125a, 127, 128) comprises an upper surface (112, 122) and a lower surface (114, 124) which are non-planar, and in any adjacent two of the main machine module (110, 110a) and the expansion modules (120, 120a, 125, 125a, 127, 128), a profile of the upper surface (112, 122) of a lower one corresponds to a profile of the lower surface (114, 124) of the other.

4. The stacked computer system (100, 100a) as claimed in claim 3, wherein one of the upper surface (112, 122) and the lower surface (114, 124) is a convex surface, and the other is a concave surface.

5. The stacked computer system (100, 100a) as claimed in claim 1, wherein each of the main machine module (110, 110a) and the expansion modules (120, 120a, 125, 125a, 127, 128) comprises a groove (162) recessed from a lower surface (114, 124) and a cap (160) protruding from an upper surface (112, 122), and in any adjacent two of the main machine module (110, 110a) and the expansion modules (120, 120a, 125, 125a, 127, 128), the cap (160) of a lower one is accommodated in the groove (162) of the other.

6. The stacked computer system (100, 100a) as claimed in claim 5, wherein each of the main machine module (110, 110a) and the expansion modules (120, 120a, 125, 125a, 127, 128) comprises a plurality of anti-offset lead angles (164) provided around the groove (162), and the anti-offset lead angles (164) face toward the groove (162).

7. The stacked computer system (100, 100a) as claimed in claim 1, wherein the data transmission control interface comprises pins (A1 to A12, B1 to B12, G1 to G6) of at least one of an SMBUS interface, a USB interface, a PCI-E interface, a SATA interface, and an I2C BUS interface.

8. The stacked computer system (100, 100a) as claimed in claim 1, wherein the power supply interface comprises at least one of a 3.3V pin, a 5V pin, and a 12V pin.

9. The stacked computer system (100, 100a) as claimed in claim 1, wherein the data transmission control interface comprises pins (A1 to A12, B1 to B12, G1 to G6) of at least one of an EDP interface, an LVDS interface, a DP interface, and an HDMI interface.

10. The stacked computer system (100, 100a) as claimed in claim 1, wherein the detection interface comprises pins (A1 to A12, B1 to B12, G1 to G6) of at least one of Detect PIN, GPIO, and COM Port.

11. The stacked computer system (100, 100a) as claimed in claim 1, wherein the expansion modules (120, 120a, 125, 125a, 127, 128) comprise at least two of a speaker module, a battery module, a 5G signal module, and a display module.
